# EUROPEAN PATENT APPLICATION

(11) **EP 3 754 583 A1**
(43) Date of publication of application: **23.12.2020**
(21) Application number: 20183582.4
(22) Date of filing: 21.12.2016
(51) Int. Cl.: G06Q 30/06, G06Q 10/02, G06Q 50/30, G07C 5/00

(54) **SYSTEMS AND METHODS FOR CARPOOLING**

(30) Priority: 08.03.2016 CN 201610135580
(62) Divisional of application: 16893329.9
(71) Applicant: Beijing Didi Infinity Technology and Development Co., Ltd., Beijing 100193 (CN)
(72) Inventor: Huang, Meiling, Haidian District, Beijing 100193 (CN)
(74) Representative: Barker Brettell LLP

(57) **Abstract**

A system may include at least one computer-readable storage medium configured to store a set of instructions for providing carpool request to a user and a contact thereof, and at least one processor in communication with the computer-readable storage medium, wherein when executing the set of instructions, the at least one processor is directed to: obtain a carpooling request including at least one contact from a first passenger terminal; identify at least one second passenger terminal associated with the at least one contact from a user of the first passenger terminal; send an invitation to a candidate second passenger terminal among the at least one second passenger terminal; and obtain a response to the invitation from the candidate second passenger terminal indicating whether the carpooling request is accepted.

## Description

### CROSS-REFERENCE TO RELATED APPLICATIONS

This application claims priority to Chinese Application No. 201610135580.4 filed on March 8, 2016, the content of which is incorporated herein in its entirety by reference.

### TECHNICAL FIELD

The present disclosure generally relates to systems and methods for on-demand service, and in particular, systems and methods for carpooling.

### BACKGROUND

On-demand transportation service, such as taxi services, has become more and more popular. As travel cost is high for private transportation services and public transportation is not convenient enough, carpooling service plays an important role for both drivers and passengers. A problem with carpooling is that people may not wish to carpool with a stranger for security reasons. But, carpooling between acquaintances and friends is widely welcomed and in high demand.

### SUMMARY

According to exemplary embodiments of the present disclosure, a system may include at least one computer-readable storage medium configured to store a set of instructions for providing carpool service to a user and a contact thereof, and at least one processor in communication with the computer-readable storage medium, wherein when executing the set of instructions, the at least one processor is directed to: obtain a carpooling request including at least one contact from a first passenger terminal; identify at least one second passenger terminal associated with the at least one contact from a user of the first passenger terminal; send an invitation to a candidate second passenger terminal among the at least one second passenger terminal; and obtain a response to the invitation from the candidate second passenger terminal indicating whether the carpooling request is accepted.

According to exemplary embodiments of the present disclosure, a method for providing carpooling service to a user and a contact thereof may include obtaining, by a computer server, a carpooling request including at least one contact from a first passenger terminal; identifying, by the computer server, at least one second passenger terminal associated with the at least one contact; sending, by the computer server, an invitation to a candidate second passenger terminal among the at least one second passenger terminal; and obtaining, by the computer server, a response to the invitation from the candidate second passenger terminal indicating whether the carpooling request is accepted.

According to exemplary embodiments of the present disclosure, a non-transitory computer readable medium including at least one set of instructions for providing carpooling service to a user and a contact thereof, wherein when executed by a processor of a computer server, the at least one set of instructions directs the processor to perform acts of: obtaining a carpooling request including at least one contact from a first passenger terminal; identifying at least one second passenger terminal associated with the at least one contact; sending an invitation to a candidate second passenger terminal among the at least one second passenger terminal; and obtaining a response to the invitation from the candidate second passenger terminal indicating whether the carpooling request is accepted.

According to exemplary embodiments of the present disclosure, a system may include at least one computer-readable storage medium including a set of instructions for providing carpooling service to a user and a contact thereof, and at least one processor in communication with the computer-readable storage medium, wherein when executing the set of instructions, the at least one processor is directed to: obtain a first carpooling request including first matching information and a first travel starting point from a first passenger terminal associated with a first passenger; obtain a second carpooling request including second matching information and a second travel starting point from a second passenger terminal associated with a second passenger; determine that the first passenger and the second passenger have a prior agreement of carpooling when the first matching information matches the second matching information; generate a carpooling order based on the first carpooling request and the second carpooling request; and send a confirmation notification of the carpooling order to the first passenger terminal and the second passenger terminal.

According to exemplary embodiments of the present disclosure, a method for providing carpooling service to a user and a contact thereof may include obtaining, by a computer server, a first carpooling request including first matching information and a first travel starting point from a first passenger terminal associated with a first passenger; obtaining, by the computer server, a second carpooling request including second matching information and a second travel starting point from a second passenger terminal associated with a second passenger; determining, by the computer server, that the first passenger and the second passenger have a prior agreement of carpooling when the first matching information matches the second matching information; generating, by the computer server, a carpooling order based on the first carpooling request and the second carpooling request; and sending, by the computer server, a confirmation notification of the carpooling order to the first passenger terminal and the second passenger terminal.

According to exemplary embodiments of the present disclosure, a non-transitory computer readable medium including at least one set of instructions for providing carpooling service to a user and a contact thereof, wherein when executed by a processor of a computer server, the at least one set of instructions directs the processor to perform acts of: obtaining a first carpooling request including first matching information and a first travel starting point from a first passenger terminal associated with a first passenger; obtaining a second carpooling request including second matching information and a second travel starting point from a second passenger terminal associated with a second passenger; determine that the first passenger and the second passenger have a prior agreement of carpooling when the first matching information matches the second matching information; generate a carpooling order based on the first carpooling request and the second carpooling request; and send a confirmation notification of the carpooling order to the first passenger terminal and the second passenger terminal.

Other aspects and embodiments of the invention are set out in the following clauses:
1. A system, comprising:
   at least one computer-readable storage medium including a set of instructions for providing carpool service to a user and a contact thereof; and
   at least one processor in communication with the computer-readable storage medium, wherein when executing the set of instructions, the at least one processor is directed to:
      obtain a carpooling request including at least one contact from a first passenger terminal;
      identify at least one second passenger terminal associated with the at least one contact;
      send an invitation to a candidate second passenger terminal among the at least one second passenger terminal; and
      obtain a response to the invitation from the candidate second passenger terminal indicating whether the carpooling request is accepted.
2. The system of clause 1, wherein the response to the invitation comprises a refusal response to refuse the invitation, and
   the at least one processor is further directed to:
   send a failure notification of the carpooling request to the first passenger terminal.
3. The system of clause 2, the at least one processor is further directed to:
   send a re-carpooling request to the first passenger terminal; and
   obtain a reply to the re-carpooling request from the first passenger terminal.
4. The system of clause 1, wherein the response to the invitation comprises an acceptance response to accept the invitation; and
   the at least one processor is further directed to:
   generate a carpooling order based on the carpooling request; and
   send a confirmation notification of the carpooling order to the first passenger terminal and the candidate second passenger terminal.
5. The system of clause 4, the at least one processor is further directed to:
   obtain a success confirmation of the carpooling order;
   determine a first payment amount of the first passenger terminal; and
   determine a second payment amount of the second passenger terminal.
6. A method for providing carpooling service to a user and a contact thereof, comprising:
   obtaining, by a computer server, a carpooling request including at least one contact from a first passenger terminal;
   identifying, by the computer server, at least one second passenger terminal associated with the at least one contact;
   sending, by the computer server, an invitation to a candidate second passenger terminal among the at least one second passenger terminal; and
   obtaining, by the computer server, a response to the invitation from the candidate second passenger terminal indicating whether the carpooling request is accepted.
7. The method of clause 6, wherein the response to the invitation comprises a refusal response to refuse the invitation, and
   the method further comprising:
   sending, by the computer server, a failure notification of the carpooling request to the first passenger terminal.
8. The method of clause 7, further comprising:
   sending, by the computer server, a re-carpooling request to the first passenger terminal; and
   obtaining, by the computer server, a reply to the re-carpooling request from the first passenger terminal.
9. The method of clause 6, wherein the response to the invitation comprises an acceptance response to accept the invitation; and
   the method further comprising:
   generating, by the computer server, a carpooling order based on the carpooling request; and
   sending, by the computer server, a confirmation notification of the carpooling order to the first passenger terminal and the candidate second passenger terminal.
10. The method of clause 9, further comprising:
   obtaining, by the computer server, a success confirmation of the carpooling order;
   determining, by the computer server, a first payment amount of the first passenger terminal; and
   determining, by the computer server, a second payment amount of the second passenger terminal.
11. A non-transitory computer readable medium, comprising at least one set of instructions for providing carpooling service to a user and a contact thereof, wherein when executed by a processor of a computer server, the at least one set of instructions directs the processor to perform acts of:
   obtaining a carpooling request including at least one contact from a first passenger terminal;
   identifying at least one second passenger terminal associated with the at least one contact;
   sending an invitation to a candidate second passenger terminal among the at least one second passenger terminal; and
   obtaining a response to the invitation from the candidate second passenger terminal indicating whether the carpooling request is accepted.
12. A system, comprising:
   at least one computer-readable storage medium including a set of instructions for providing carpooling service to a user and a contact thereof; and
   at least one processor in communication with the computer-readable storage medium, wherein when executing the set of instructions, the at least one processor is directed to:
      obtain a first carpooling request including first matching information and a first travel starting point from a first passenger terminal associated with a first passenger;
      obtain a second carpooling request including second matching information and a second travel starting point from a second passenger terminal associated with a second passenger;
      determine that the first passenger and the second passenger have a prior agreement of carpooling when the first matching information matches the second matching information;
      generate a carpooling order based on the first carpooling request and the second carpooling request; and
      send a confirmation notification of the carpooling order to the first passenger terminal and the second passenger terminal.
13. The system of clause 12, wherein the at least one processor is further directed to:
   send a failure notification of the first carpooling request to the first passenger terminal, when at least one of the following occurs:
   the first travel starting point is outside the predetermined distance from the second travel starting point, or
   the first matching information mismatches the second matching information.
14. The system of clause 13, wherein the at least one processor is further directed to:
   send a re-carpooling request to the first passenger terminal; and
   obtain a reply to the re-carpooling request from the first passenger terminal.
15. The system of clause 12, wherein the at least one processor is further directed to:
   obtain a success confirmation of the carpooling order;
   determine a payment amount of the first passenger terminal; and
   determine a second payment amount of the second passenger terminal.
16. A method for providing carpooling service to a user and a contact thereof, comprising:
   obtaining, by a computer server, a first carpooling request including first matching information and a first travel starting point from a first passenger terminal associated with a first passenger;
   obtaining, by the computer server, a second carpooling request including second matching information and a second travel starting point from a second passenger terminal associated with a second passenger;
   determining, by the computer server, that the first passenger and the second passenger have a prior agreement of carpooling when the first matching information matches the second matching information;
   generating, by the computer server, a carpooling order based on the first carpooling request and the second carpooling request; and
   sending, by the computer server, a confirmation notification of the carpooling order to the first passenger terminal and the second passenger terminal.
17. The method of clause 16, further comprising:
   sending, by the computer server, a failure notification of the first carpooling request to the first passenger terminal, when at least one of the following occurs:
   the first travel starting point is outside the predetermined distance from the second travel starting point, or
   the first matching information mismatches the second matching information.
18. The method of clause 17, further comprising:
   sending, by the computer server, a re-carpooling request to the first passenger terminal; and
   obtaining, by the computer server, a reply to the re-carpooling request from the first passenger terminal.
19. The method of clause 16, further comprising:
   obtaining, by the computer server, a success confirmation of the carpooling order;
   determining, by the computer server, a first payment amount of the first passenger terminal; and
   determining, by the computer server, a second payment amount of the second passenger terminal.
20. A non-transitory computer readable medium, comprising at least one set of instructions for providing carpooling service to a user and a contact thereof, wherein when executed by a processor of a computer server, the at least one set of instructions directs the processor to perform acts of:
   obtaining a first carpooling request including first matching information and a first travel starting point from a first passenger terminal associated with a first passenger;
   obtaining a second carpooling request including second matching information and a second travel starting point from a second passenger terminal associated with a second passenger;
   determining that the first passenger and the second passenger have a prior agreement of carpooling when the first matching information matches the second matching information;
   generating a carpooling order based on the first carpooling request and the second carpooling request; and
   sending a confirmation notification of the carpooling order to the first passenger terminal and the second passenger terminal.

### BRIEF DESCRIPTION OF THE DRAWINGS

The present disclosure is further described in terms of exemplary embodiments. The foregoing and other aspects of embodiments of present disclosure are made more evident in the following detail description, when read in conjunction with the attached drawing figures.
FIG. 1 is a block diagram of an exemplary on-demand service system according to some embodiments;
FIG. 2 is a schematic diagram illustrating exemplary hardware and software components of a computing device according to some embodiments;
FIG. 3 is a block diagram illustrating an exemplary processing engine according to some embodiments;
FIG. 4 is a flowchart of an exemplary process for carpooling according to some embodiments;
FIG. 5 is a flowchart of an exemplary process for carpooling according to some embodiments;
FIG. 6 is a flowchart of an exemplary process for carpooling according to some embodiments;
FIG. 7 is a flowchart of an exemplary process for carpooling according to some embodiments; and
FIG. 8 is a flowchart of an exemplary process for carpooling according to some embodiments.

### DETAILED DESCRIPTION

The following description is presented to enable any person skilled in the art to make and use the present disclosure, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown, but is to be accorded the widest scope consistent with the claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprises," "comprising," "includes," and/or "including" when used in this specification, specify the presence of stated features, integers, steps, operations, elements, and/or components, but do not preclude the presence or addition of one or more other features, integers, steps, operations, elements, components, and/or groups thereof.

These and other features, and characteristics of the present disclosure, as well as the methods of operation and functions of the related elements of structure and the combination of parts and economies of manufacture, may become more apparent upon consideration of the following description with reference to the accompanying drawing(s), all of which form a part of this specification. It is to be expressly understood, however, that the drawing(s) are for the purpose of illustration and description only and are not intended to limit the scope of the present disclosure. It is understood that the drawings are not to scale.

The flowcharts used in the present disclosure illustrate operations that systems implement according to some embodiments in the present disclosure. It is to be expressly understood, the operations of the flowchart may or may not be implemented in order. Conversely, the operations may be implemented in inverted order, or simultaneously. Moreover, one or more other operations may be added to the flowcharts. One or more operations may be removed from the flowcharts.

Moreover, while the system and method in the present disclosure is described primarily in regard to scheduling vehicles, it should also be understood that this is only one exemplary embodiment. The system or method of the present disclosure may be applied to any other kind of on-demand service. For example, the system or method of the present disclosure may be applied to different transportation systems including land, ocean, aerospace, or the like, or any combination thereof. The vehicle of the transportation systems may include a taxi, a private car, a hitch, a bus, a train, a bullet train, a high speed rail, a subway, a vessel, an aircraft, a spaceship, a hot-air balloon, a driverless vehicle, or the like, or any combination thereof. The transportation system may also include any transportation system that applies management and/or distribution, for example, a system for sending and/or receiving an express. The application scenarios of the system or method of the present disclosure may include a webpage, a plug-in of a browser, a client terminal, a custom system, an internal analysis system, an artificial intelligence robot, or the like, or any combination thereof.

The term "passenger," "requester," "service requester," and "customer" in the present disclosure are used interchangeably to refer to an individual, an entity or a tool that may request or order a service. Also, the term "driver," "provider," "service provider," and "supplier" in the present disclosure are used interchangeably to refer to an individual, an entity or a tool that may provide a service or facilitate the providing of the service. The term "user" in the present disclosure may refer to an individual, an entity or a tool that may request a service, order a service, provide a service, or facilitate the providing of the service. For example, the user may be a passenger, a driver, an operator, or the like, or any combination thereof. In the present disclosure, "requester terminal" and "passenger terminal" may be used interchangeably, and "provider terminal" and "driver terminal" may be used interchangeably.

The term "carpooling" in the present disclosure refers to a sharing of journeys so that more than one person travels in a car. In the present disclosure, the carpooling service may refer to a service that more than one passengers request for sharing journeys and call for a vehicle. The carpooling service may also refer to a service that a driver wants to share his/her vehicle with at least one passenger during the journey. The carpooling service may be a one-off.

The term "request" in the present disclosure refers to a request that may be initiated by a passenger, a requester, a service requester, a customer, a driver, a provider, a service provider, a supplier, or the like, or any combination thereof. The request may be accepted by any one of a passenger, a requester, a service requester, a customer, a driver, a provider, a service provider, or a supplier. The request may be chargeable, or free. The term "order" in the present disclosure refers to an intention that both a passenger (or a requester, a service requester, a customer, etc.) and a driver (or a provider, a service provider, or a supplier, etc.) show agreement of the request.

The position and/or the travel starting point in the present disclosure may be acquired by positioning technology embedded in the passenger terminal. The positioning technology used in the present disclosure may include a global positioning system (GPS), a global navigation satellite system (GLONASS), a compass navigation system (COMPASS), a Galileo positioning system, a quasi-zenith satellite system (QZSS), a wireless fidelity (WiFi) positioning technology, or the like, or any combination thereof. One or more of the above positioning technologies may be used interchangeably in the present disclosure.

An aspect of the present disclosure relates to online systems and methods for finding sharable and/or combinable transportation transactions, such as carpooling, and in particular, carpooling between acquaintances and friends. According to the present disclosure, the systems and methods may require a requester include information of one or more of his/her contacts in a carpooling request. The systems and methods may transfer the request to the one or more contacts and select one who agrees to carpool for the requester.

It should be noted that online on-demand transportation service, such as online taxi hailing, is a new form of service rooted only in post-Internet era. It provides technical solutions to users and service providers that could raise only in post-Internet era. In pre-Internet era, when a user hails a taxi on street, the taxi request and acceptance occur only between the passenger and one taxi driver that sees the passenger. If the passenger hails a taxi through telephone call, the service request and acceptance may occur only between the passenger and one service provider (e.g., one taxi company or agent). Online taxi, however, allows a user of the service to real-time and automatic distribute a service request to a vast number of individual service providers (e.g., taxi) distance away from the user. It also allows a plurality of service provides to respond to the service request simultaneously and in real-time. Therefore, through Internet, the online on-demand transportation systems may provide a much more efficient transaction platform for the users and the service providers that may never met in a traditional pre-Internet transportation service system. Carpooling between acquaintances and friends, which is a special kind of online on-demand transportation service, provides a secure and efficient service for both passengers and drivers.

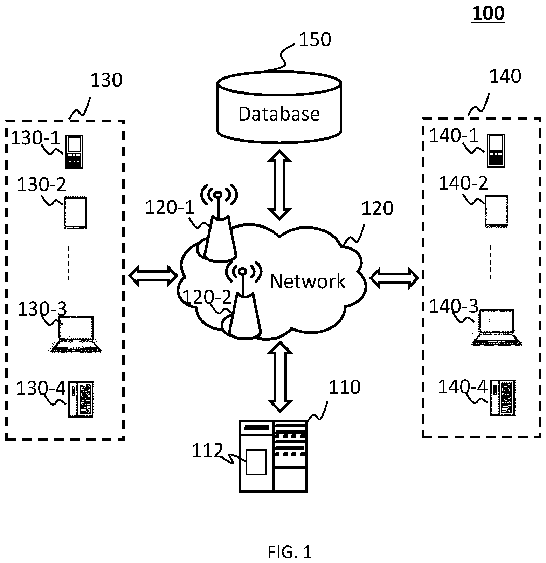

FIG. 1 is a block diagram of an exemplary on-demand service system 100 according to some embodiments. For example, the on-demand service system 100 may be an online transportation service platform for transportation services such as taxi hailing, chauffeur service, express car, carpool, bus service, driver hire and shuttle service. The on-demand service system 100 may be an online platform including a server 110, a network 120, a requestor terminal 130, a provider terminal 140, and a database 150. The server 110 may include a processing engine 112.

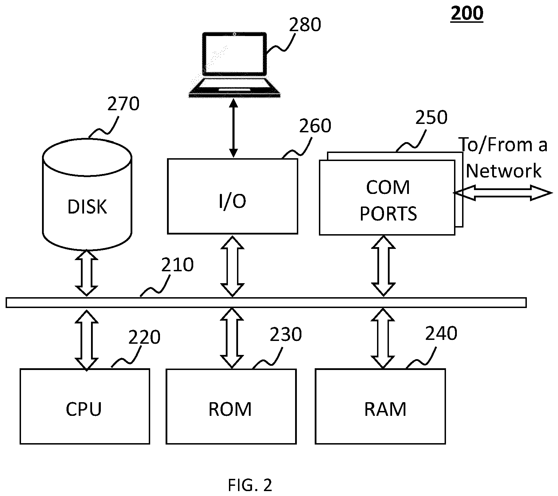

In some embodiments, the server 110 may be a single server, or a server group. The server group may be centralized, or distributed (e.g., server 110 may be a distributed system). In some embodiments, the server 110 may be local or remote. For example, the server 110 may access information and/or data stored in the requestor terminal 130, the provider terminal 140, and/or the database 150 via the network 120. As another example, the server 110 may be directly connected to the requestor terminal 130, the provider terminal 140, and/or the database 150 to access stored information and/or data. In some embodiments, the server 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the server 110 may be implemented on a computing device 200 having one or more components illustrated in FIG. 2 in the present disclosure.

In some embodiments, the server 110 may include a processing engine 112. The processing engine 112 may process information and/or data relating to the service request to perform one or more functions described in the present disclosure. For example, the processing engine 112 may determine a target vehicle based on the service request obtained from the requestor terminal 130. In some embodiments, the processing engine 112 may include one or more processing engines (e.g., single-core processing engine(s) or multi-core processor(s)). Merely by way of example, the processing engine 112 may include a central processing unit (CPU), an application-specific integrated circuit (ASIC), an application-specific instruction-set processor (ASIP), a graphics processing unit (GPU), a physics processing unit (PPU), a digital signal processor (DSP), a field programmable gate array (FPGA), a programmable logic device (PLD), a controller, a microcontroller unit, a reduced instruction-set computer (RISC), a microprocessor, or the like, or any combination thereof.

The network 120 may facilitate exchange of information and/or data. In some embodiments, one or more components in the on-demand service system 100 (e.g., the server 110, the requestor terminal 130, the provider terminal 140, and the database 150) may send information and/or data to other component(s) in the on-demand service system 100 via the network 120. For example, the server 110 may obtain/acquire service request from the requestor terminal 130 via the network 120. In some embodiments, the network 120 may be any type of wired or wireless network, or combination thereof. Merely by way of example, the network 130 may include a cable network, a wireline network, an optical fiber network, a tele communications network, an intranet, an Internet, a local area network (LAN), a wide area network (WAN), a wireless local area network (WLAN), a metropolitan area network (MAN), a wide area network (WAN), a public telephone switched network (PSTN), a Bluetooth network, a ZigBee network, a near field communication (NFC) network, or the like, or any combination thereof. In some embodiments, the network 120 may include one or more network access points. For example, the network 120 may include wired or wireless network access points such as base stations and/or internet exchange points 120-1, 120-2, ..., through which one or more components of the on-demand service system 100 may be connected to the network 120 to exchange data and/or information.

In some embodiments, a requestor may be a user of the requestor terminal 130. In some embodiments, the user of the requestor terminal 130 may be someone other than the requestor. For example, a user A of the requestor terminal 130 may use the requestor terminal 130 to send a service request for a user B, or receive service and/or information or instructions from the server 110. In some embodiments, a provider may be a user of the provider terminal 140. In some embodiments, the user of the provider terminal 140 may be someone other than the provider. For example, a user C of the provider terminal 140 may user the provider terminal 140 to receive a service request for a user D, and/or information or instructions from the server 110. In some embodiments, "requestor" and "requestor terminal" may be used interchangeably, and "provider" and "provider terminal" may be used interchangeably.

In some embodiments, the requestor terminal 130 may include a mobile device 130-1, a tablet computer 130-2, a laptop computer 130-3, a built-in device in a motor vehicle 130-4, or the like, or any combination thereof. In some embodiments, the mobile device 130-1 may include a smart home device, a wearable device, a smart mobile device, a virtual reality device, an augmented reality device, or the like, or any combination thereof. In some embodiments, the smart home device may include a smart lighting device, a control device of an intelligent electrical apparatus, a smart monitoring device, a smart television, a smart video camera, an interphone, or the like, or any combination thereof. In some embodiments, the wearable device may include a smart bracelet, a smart footgear, a smart glass, a smart helmet, a smart watch, a smart clothing, a smart backpack, a smart accessory, or the like, or any combination thereof. In some embodiments, the smart mobile device may include a smartphone, a personal digital assistance (PDA), a gaming device, a navigation device, a point of sale (POS) device, or the like, or any combination thereof. In some embodiments, the virtual reality device and/or the augmented reality device may include a virtual reality helmet, a virtual reality glass, a virtual reality patch, an augmented reality helmet, an augmented reality glass, an augmented reality patch, or the like, or any combination thereof. For example, the virtual reality device and/or the augmented reality device may include a Google Glass, an Oculus Rift, a Hololens, a Gear VR, etc. In some embodiments, built-in device in the motor vehicle 130-4 may include an onboard computer, an onboard television, etc. In some embodiments, the requestor terminal 130 may be a device with positioning technology for locating the position of the requestor and/or the requestor terminal 130.

In some embodiments, the provider terminal 140 may be similar to, or the same device as the requestor terminal 130. In some embodiments, the provider terminal 140 may be a device with positioning technology for locating the position of the provider and/or the provider terminal 140. In some embodiments, the requestor terminal 130 and/or the provider terminal 140 may communicate with other positioning device to determine the position of the requestor, the requestor terminal 130, the provider, and/or the provider terminal 140. In some embodiments, the requestor terminal 130 and/or the provider terminal 140 may send positioning information to the server 110.

The database 150 may store data and/or instructions. In some embodiments, the database 150 may store data obtained from the requestor terminal 130 and/or the provider terminal 140. In some embodiments, the database 150 may store data and/or instructions that the server 110 may execute or use to perform exemplary methods described in the present disclosure. In some embodiments, database 150 may include a mass storage, a removable storage, a volatile read-and-write memory, a read-only memory (ROM), or the like, or any combination thereof. Exemplary mass storage may include a magnetic disk, an optical disk, a solid-state drives, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (PEROM), an electrically erasable programmable ROM (EEPROM), a compact disk ROM (CD-ROM), and a digital versatile disk ROM, etc. In some embodiments, the database 150 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the database 150 may be connected to the network 120 to communicate with one or more components in the on-demand service system 100 (e.g., the server 110, the requestor terminal 130, the provider terminal 140, etc.). One or more components in the on-demand service system 100 may access the data or instructions stored in the database 150 via the network 120. In some embodiments, the database 150 may be directly connected to or communicate with one or more components in the on-demand service system 100 (e.g., the server 110, the requestor terminal 130, the provider terminal 140, etc.). In some embodiments, the database 150 may be part of the server 110.

In some embodiments, one or more components in the on-demand service system 100 (e.g., the server 110, the requestor terminal 130, the provider terminal 140, etc.) may have a permission to access the database 150. In some embodiments, one or more components in the on-demand service system 100 may read and/or modify information relating to the requestor, provider, and/or the public when one or more conditions are met. For example, the server 110 may read and/or modify one or more users' information after a service. As another example, the provider terminal 140 may access information relating to the requestor when receiving a service request from the requestor terminal 130, but the provider terminal 140 may not modify the relevant information of the requestor.

In some embodiments, information exchanging of one or more components in the on-demand service system 100 may be achieved by way of requesting a service. The object of the service request may be any product. In some embodiments, the product may be a tangible product, or an immaterial product. The tangible product may include food, medicine, commodity, chemical product, electrical appliance, clothing, car, housing, luxury, or the like, or any combination thereof. The immaterial product may include a servicing product, a financial product, a knowledge product, an internet product, or the like, or any combination thereof. The internet product may include an individual host product, a web product, a mobile internet product, a commercial host product, an embedded product, or the like, or any combination thereof. The mobile internet product may be used in a software of a mobile terminal, a program, a system, or the like, or any combination thereof. The mobile terminal may include a tablet computer, a laptop computer, a mobile phone, a personal digital assistance (PDA), a smart watch, a point of sale (POS) device, an onboard computer, an onboard television, a wearable device, or the like, or any combination thereof. For example, the product may be any software and/or application used in the computer or mobile phone. The software and/or application may relate to socializing, shopping, transporting, entertainment, learning, investment, or the like, or any combination thereof. In some embodiments, the software and/or application relating to transporting may include a traveling software and/or application, a vehicle scheduling software and/or application, a mapping software and/or application, etc. In the vehicle scheduling software and/or application, the vehicle may include a horse, a carriage, a rickshaw (e.g., a wheelbarrow, a bike, a tricycle, etc.), a car (e.g., a taxi, a bus, a private car, etc.), a train, a subway, a vessel, an aircraft (e.g., an airplane, a helicopter, a space shuttle, a rocket, a hot-air balloon, etc.), or the like, or any combination thereof.

FIG. 2 is a schematic diagram illustrating exemplary hardware and software components of a computing device 200 on which the server 110, the requestor terminal 130, and/or the provider terminal 140 may be implemented according to some embodiments of the present disclosure. For example, the processing engine 112 may be implemented on the computing device 200 and configured to perform functions of the processing engine 112 disclosed in this disclosure.

The computing device 200 may be a special purpose computer in some embodiments. The computing device 200 may be used to implement an on-demand system for the present disclosure. The computing device 200 may implement any component of the on-demand service as described herein. In FIGs. 1-2, only one such computer device is shown purely for convenience purposes. One of ordinary skill in the art would understood at the time of filing of this application that the computer functions relating to the on-demand service as described herein may be implemented in a distributed fashion on a number of similar platforms, to distribute the processing load.

The computing device 200, for example, may include COM ports 250 connected to and from a network connected thereto to facilitate data communications. The computing device 200 may also include a central processing unit (CPU, or processor) 220, in the form of one or more processors, for executing program instructions. The exemplary computer platform may include an internal communication bus 210, a program storage and a data storage of different forms, for example, a disk 270, and a read only memory (ROM) 230, or a random access memory (RAM) 240, for various data files to be processed and/or transmitted by the computer. The exemplary computer platform may also include program instructions stored in the ROM 230, the RAM 240, and/or other type of non-transitory storage medium to be executed by the CPU/processor 220. The methods and/or processes of the present disclosure may be implemented as the program instructions. The computing device 200 may also include an I/O component 260, supporting input/output between the computer and other components therein such as a user interface element 280. The computing device 200 may also receive programming and data via network communications.

Merely for illustration, only one CPU/processor 220 is described in the computing device 200. However, it should be note that the computing device 200 in the present disclosure may also include multiple CPUs/processors, thus operations and/or method steps that are performed by one CPU/processor 220 as described in the present disclosure may also be jointly or separately performed by the multiple CPUs/processors. For example, if in the present disclosure the CPU/processor 220 of the computing device 200 executes both step A and step B, it should be understood that step A and step B may also be performed by two different CPUs/processors jointly or separately in the computing device 200 (e.g., the first processor executes step A and the second processor executes step B, or the first and second processors jointly execute steps A and B).

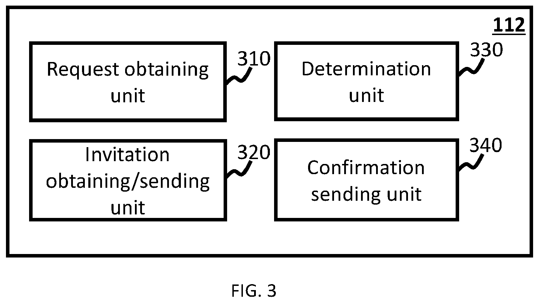

FIG. 3 is a block diagram illustrating an exemplary processing engine 112 according to some embodiments of the present disclosure. The processing engine 112 may include a request obtaining unit 310, an invitation obtaining/sending unit 320, a determination unit 330, and a notification sending unit 340.

The request obtaining unit 310 may be configured to obtain a first carpooling request from a first passenger terminal, and/or a second carpooling request from a second passenger terminal. In some embodiments, the request obtaining unit 310 may be configured to obtain a re-carpooling request from the first passenger terminal.

The invitation obtaining/sending unit 320 may be configured to obtain an invitation from a first passenger terminal, and/or send an invitation to a candidate second passenger terminal among the at least one second passenger terminal.

The determination unit 330 may be configured to determine a first payment amount of the first passenger terminal, and/or a second payment amount of the second passenger terminal. In some embodiments, the determination unit 330 may be configured to determine that the first passenger and the second passenger have a prior agreement of carpooling.

The notification sending unit 340 may be configured to send a confirmation notification of the carpooling order to the first passenger terminal, and/or the second passenger terminal. In some embodiments, the notification sending unit 340 may be configured to send a failure notification of the carpooling request to the first passenger terminal.

The modules in the processing engine 112 may be connected to or communicate with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth, a ZigBee, a Near Field Communication (NFC), or the like, or any combination thereof. Two or more of the modules may be combined as a single module, and any one of the modules may be divided into two or more units. For example, the request obtaining unit 310 may be integrated in the invitation obtaining/sending unit 320 as a single module which may both obtain features of orders and determine matching information of the orders.

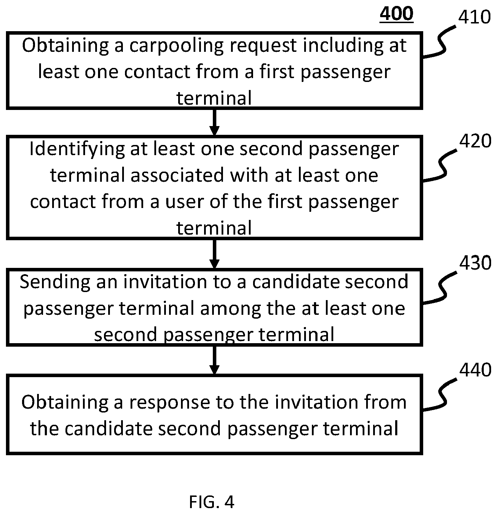

FIG. 4 is a flowchart of an exemplary process 400 for carpooling according to some embodiments. In some embodiments, the process 400 may be implemented in the system 100 illustrated in FIG. 1. For example, the process 400 may be stored in the database 150 and/or the storage (e.g., the ROM 230, the RAM 240, etc.) as a form of instructions, and invoked and/or executed by the server 110 (e.g., the processing engine 112 in the server 110, the processor 220 of the processing engine 112 in the server 110, or one or more components in the processing engine 112 illustrated in FIG. 3).

In step 410, the processor 220 may obtain/acquire a carpooling request from a first passenger terminal, wherein the carpooling request includes at least one contact of a user (i.e., a first passenger) of the first passenger terminal.

In some embodiments, the contact may include a contact of the first passenger saved in an address book of the first passenger terminal, a contact of the first passenger from a social network service embedded in the first passenger terminal (e.g., an e-mail, an instant messaging service, an online forum, a shopping software and/or application, a traveling software and/or application, a vehicle scheduling software and/or application, a mapping software and/or application, a payment software and/or application, etc.), or the like, or any combination thereof. In some embodiments, the carpooling request may further include a first travel starting point of the first passenger terminal, a first starting time of the first passenger terminal, a first travel destination of the first passenger terminal, a first position of the first passenger terminal, an identifier of the first passenger terminal, or the like, or any combination thereof. In some embodiments, the position of the first passenger terminal may be the same place as the travel starting point of the first passenger terminal. For example, the position and/or the travel starting point may be acquired by positioning technology embedded in the first passenger terminal. In some embodiments, the identifier of the first passenger terminal may include a media access control (MAC) address of the first passenger terminal, a serial number of the first passenger terminal, a central processing unit (CPU) serial number of the first passenger terminal, a phone number associated with the first passenger terminal, a name associated with the first passenger terminal, a user identity (ID) associated with the first passenger terminal, an avatar associated with the first passenger terminal, or the like, or any combination thereof.

In some embodiments, the at least one contact may be selected by the first passenger, for example, from an address book of the first passenger terminal, a contact list from a software/application embedded in the first passenger terminal, etc. In some embodiments, the first passenger may select a name, a number, a user identity (ID), an avatar of the contact, or the like, or any combination thereof. In some embodiments, the amount of the at least one contact may be determined according to the seat of the vehicle that associated with the carpooling request.

In some embodiments, the first passenger may be a driver who wants to share his/her vehicle with someone from his/her contact(s). Accordingly, the first passenger terminal that requests for a carpooling service may be a driver terminal operated by the driver. The amount of the at least one contact may be four at most when the vehicle has a total number of five seats. In some embodiments, the first passenger may be a passenger who hails a vehicle with a driver. Accordingly, the first passenger terminal that requests a carpooling service may be a passenger terminal operated by the passenger who wants to share journey with someone from his/her contact(s). The amount of the at least one contact may be three at most when the vehicle has a total number of fiver seats.

In step 420, the processor 220 may identify at least one second passenger terminal associated with the at least one contact. In some embodiments, a contact may be associated with a passenger terminal.

In step 430, the processor 220 may send an invitation of the carpooling request that is associated with the first passenger terminal to a candidate second passenger terminal among the at least one second passenger terminal.

In some embodiments, the invitation may include an identifier of the first passenger terminal, a first travel starting point of the first passenger terminal, a first destination of the first passenger terminal, a confirmation information of the invitation for whether accepting the invitation of the carpooling request, or the like, or any combination thereof. In some embodiments, the invitation may be sent as a cellphone message, an e-mail, a pop-up message from a social network service, or the like, or any combination thereof.

In step 440, the processor 220 may obtain/acquire a response to the invitation from the candidate second passenger terminal indicating whether the carpooling request is accepted.

In some embodiments, the response from the candidate second passenger terminal may include a refusal response, an acceptance response, etc. In some embodiments, the response to the invitation from the candidate second passenger terminal may be obtained as a reply cellphone message, a reply e-mail, a reply to the pop-up message, or the like, or any combination thereof.

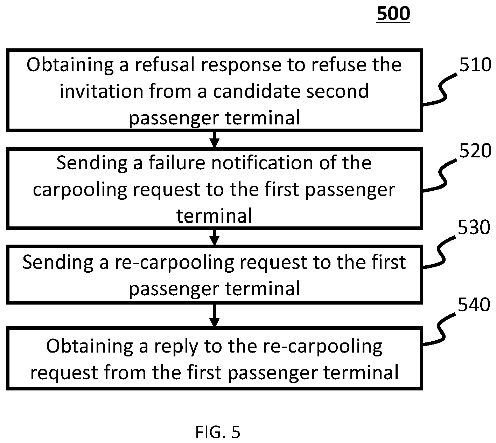

FIG. 5 is a flowchart of an exemplary process 500 for carpooling when the response is a refusal response according to some embodiments. In some embodiments, the process 500 may be implemented in the system 100 illustrated in FIG. 1. For example, the process 500 may be stored in the database 150 and/or the storage (e.g., the ROM 230, the RAM 240, etc.) as a form of instructions, and called and executed by the server 110 (e.g., the processing engine 112 in the server 110, the processor 220 of the processing engine 112 in the server 110, or one or more components in the processing engine 112 illustrated in FIG. 3).

In step 510, the processor 220 may obtain/acquire a refusal response to refuse the invitation from the candidate second passenger terminal.

In some embodiments, the processor 220 may further obtain/acquire an additional message associated with the refusal response. For example, the additional message may include an identifier associated with the candidate second passenger terminal (e.g., an identifier of the candidate second passenger terminal, a name of the candidate second passenger terminal, a number of the candidate second passenger terminal, an avatar of the candidate second passenger terminal, etc.), a refusal reason, a refusal instance, or the like, or any combination thereof.

In step 520, the processor 220 may send a failure notification of the carpooling request to the first passenger terminal.

In some embodiments, the failure notification may include an identifier associated with the candidate second passenger terminal (e.g., an identification of the contact corresponding with the candidate second passenger terminal, an identifier of the candidate second passenger terminal, a name of the candidate second passenger terminal, a number of the candidate second passenger terminal, an avatar of the candidate second passenger terminal, etc.), a refusal reason, a refusal instance, or the like, or any combination thereof.

In step 530, the processor 220 may send a re-carpooling request to the first passenger terminal to ask the first passenger whether he/she wish to resend a carpooling request to a contact.

In step 540, the processor 220 may obtain/acquire a reply to the re-carpooling request from the first passenger terminal. In some embodiments, the reply to the re-carpooling request may be "yes". The processor 220 may repeat step 410 to step 440 in FIG. 4 to re-request a carpooling service. In some embodiments, the re-carpooling request may include at least one different contact from the last carpooling request. In some embodiments, the replay to the re-carpooling request may be "no". The processor 220 may stop showing re-carpooling request to the first passenger terminal. In some embodiments, the processor 220 may obtain/acquire no replay to the re-carpooling request. The processor 220 may continue to show the re-carpooling request to the first passenger terminal until obtaining/acquiring a reply to the re-carpooling request to the re-carpooling request from the first passenger terminal.

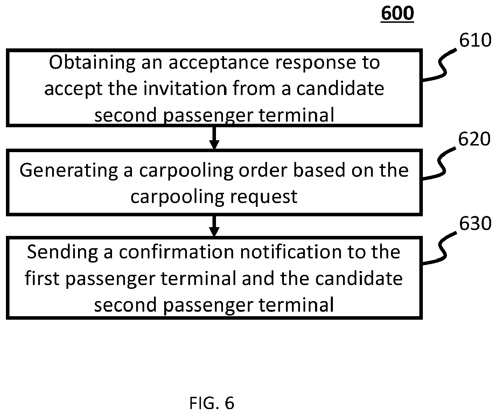

FIG. 6 is a flowchart of an exemplary process 600 for carpooling when the response is an acceptance response according to some embodiments. In some embodiments, the process 600 may be implemented in the system 100 illustrated in FIG. 1. For example, the process 600 may be stored in the database 150 and/or the storage (e.g., the ROM 230, the RAM 240, etc.) as a form of instructions, and called and executed by the server 110 (e.g., the processing engine 112 in the server 110, the processor 220 of the processing engine 112 in the server 110, or one or more components in the processing engine 112 illustrated in FIG. 3).

In step 610, the processor 220 may obtain/acquire an acceptance response to accept the invitation from the candidate second passenger terminal.

In some embodiments, the processor 220 may further obtain/acquire an additional message associated with the acceptance response. For example, the additional message may include an identifier associated with the candidate second passenger terminal (e.g., an identification of the contact corresponding to the candidate second passenger terminal, an identifier of the candidate second passenger terminal, a name of the candidate second passenger terminal, a number of the candidate second passenger terminal, an avatar of the candidate second passenger terminal, etc.), a acceptance instance, a second travel starting point of the candidate second passenger terminal, a second travel destination of the candidate second passenger terminal, a second position of the candidate second passenger terminal, or the like, or any combination thereof.

In some embodiments, the candidate second passenger terminal may be at least one second passenger terminal associated with at least one contact, for example, the amount of the second passenger terminal may be one, two, three, or four.

In step 620, the processor 220 may generate a carpooling order based on the carpooling request.

In some embodiments, the carpooling order may include the identifier of the first passenger terminal, the identifier of the candidate second passenger terminal, the first travel starting point of the first passenger terminal, the second travel starting point of the candidate second passenger terminal, the first travel destination of the first passenger terminal, the second travel destination of the candidate second passenger terminal, the first starting time of the first passenger terminal, the second starting time of the candidate second passenger terminal, the first position of the first passenger terminal, the second position of the candidate second passenger terminal, or the like, or any combination thereof. In some embodiments, the first travel starting point may be within a predetermined distance from the second travel starting point. The predetermined distance may be determined according to a scenario of the carpooling service (e.g., two or more passengers are going to the same or a nearby destination, two or more passengers have the same or a nearby starting point, two or more passenger have at least part of the same way, etc.), a traffic condition, a time period of the carpooling service, or the like, or any combination thereof. In some embodiments, the predetermined distance may be determined by a passenger that requests for a carpooling service, or a driver that offers the carpooling service.

In step 630, the processor 220 may send a confirmation notification to the first passenger terminal and the candidate second passenger terminal.

In some embodiments, the confirmation notification to the first passenger terminal and the candidate second passenger terminal may include information relating to the carpooling order. The information relating to the carpooling order may include the identity of the first passenger, the contact corresponding to the candidate second passenger terminal, the identifier of the first passenger terminal, the identifier of the candidate second passenger terminal, the first travel starting point of the first passenger terminal, the second travel starting point of the candidate second passenger terminal, the first travel destination of the first passenger terminal, the second travel destination of the candidate second passenger terminal, the first starting time of the first passenger terminal, the second starting time of the candidate second passenger terminal, the first position of the first passenger terminal, the second position of the candidate second passenger terminal, the starting time of the carpooling order, or the like, or any combination thereof. In some embodiments, the confirmation notification to the first passenger terminal and the confirmation notification to the candidate second passenger terminal may be different. For example, the confirmation notification to the first passenger terminal may include information relating to the candidate second passenger terminal (e.g., the identifier of the candidate second passenger terminal, the second travel starting point, the second starting time, the second position, the second travel destination, etc.). The confirmation notification to the candidate second passenger terminal may include information relating to the first passenger terminal (e.g., the identifier of the first passenger terminal, the first travel starting point, the first starting time, the first position, the first travel destination, etc.).

In some embodiments, when the first passenger terminal that requests for a carpooling service is a driver terminal operated by a driver who wants to share his/her vehicle with his/her contact(s), the processor 220 may send a reminder to driver terminal and the candidate second passenger terminal before the carpooling begins. In some embodiments, when the first passenger terminal that requests a carpooling service is a passenger terminal operated by a passenger who wants to share journey with his/her contact(s) and call for a vehicle, the processor 220 may send the carpooling order to at least one driver terminal. In some embodiments, when the carpooling order ends, the processor 220 may obtain/acquire a success confirmation of the carpooling order from the first passenger terminal, and/or the candidate second passenger terminal.

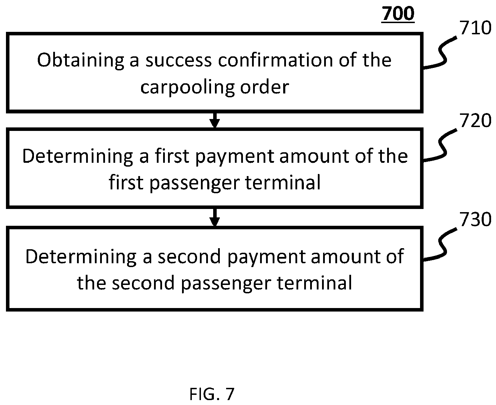

FIG. 7 is a flowchart of an exemplary process 700 for carpooling according to some embodiments. In some embodiments, the process 700 may be implemented in the system 100 illustrated in FIG. 1. For example, the process 700 may be stored in the database 150 and/or the storage (e.g., the ROM 230, the RAM 240, etc.) as a form of instructions, and called and executed by the server 110 (e.g., the processing engine 112 in the server 110, the processor 220 of the processing engine 112 in the server 110, or one or more components in the processing engine 112 illustrated in FIG. 3).

In step 710, the processor 220 may obtain/acquire a success confirmation of the carpooling order. In step 720, the processor 220 may determine a first payment amount of the first passenger terminal. In step 730, the processor 220 may determine a second payment amount of the candidate second passenger terminal.

In some embodiments, the first payment amount and the second payment amount may be predetermined before the journey begins. For example, the processor 220 may determine the payment amounts of each passenger terminal before the journey begins according to each starting time, each travel starting point, each travel destination, the service type that the vehicle offers (e.g., a private car, a bus, a taxi, etc.), or the like, or any combination thereof. In some embodiments, the first payment amount and the second payment amount may be determined after the journey ends. For example, the processor 220 may determine the payment amount of each passenger terminal according to each travel distance of the journeys, each travel period of the journeys, each waiting period of the journeys, or the like, or any combination thereof. In some embodiments, the first payment amount and the second payment amount may be calculated by dividing the total amount of the journey by the total amount of the passenger terminals. For example, the total payment amount may be 400 yuan. There are total 4 passenger terminals to share the vehicle. The first payment amount and the second payment amount may be the same of 100 yuan (400 yuan divided by 4 passenger terminals).

In some embodiments, the processor 220 may generate an order item to the first passenger terminal and/or the candidate second passenger terminal. The order item may include a payment amount, a travel distance, a travel period, a waiting period, information relating to the driver terminal (e.g., an identifier of the driver terminal, an account of the driver terminal, etc.), information relating to the vehicle (e.g., a license number, a color, a vehicle type, etc.), or the like, or any combination thereof.

In some embodiments, the processor 220 may send the first payment amount to the first passenger terminal, and/or the second payment amount to the candidate second passenger terminal. In some embodiments, the processor 220 may obtain

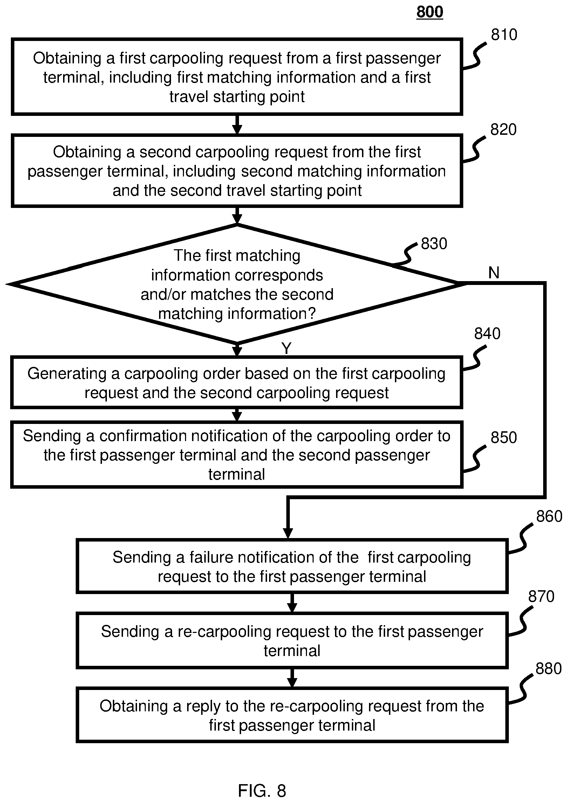

FIG. 8 is a flowchart of an exemplary process 800 for carpooling according to some embodiments. In some embodiments, the process 800 may be implemented in the system 100 illustrated in FIG. 1. For example, the process 800 may be stored in the database 150 and/or the storage (e.g., the ROM 230, the RAM 240, etc.) as a form of instructions, and called and executed by the server 110 (e.g., the processing engine 112 in the server 110, the processor 220 of the processing engine 112 in the server 110, or one or more components in the processing engine 112 illustrated in FIG. 3).

In step 810, the processor 220 may obtain/acquire a first carpooling request including first matching information and a first travel starting point from a first passenger terminal.

In some embodiments, the first carpooling request may further include a first travel destination, a first starting time, an identifier of the first passenger terminal, or the like, or any combination thereof. In some embodiments, the first matching information may include a number, a letter, a symbol, a character, an image, a sound, a code, or the like, or any combination thereof. For example, the first matching information may be a series of numbers of "1234". As another example, the first matching information may be a QR code. In some embodiments, the first matching information may be information predetermined by two or more acquaintances and/or friends who request for a carpooling service. The matching information may be used to confirm that two friends does have an intention to carpool.

In step 820, the processor 220 may obtain/acquire a second carpooling request including second matching information and a second travel starting point from a second passenger terminal associated with a second passenger. In some embodiments, the processor 220 may obtain/acquire the second carpooling request from the second passenger terminal based on some criteria. For example, when the first travel starting point is within a predetermined distance from the second travel starting point, the processor 220 may obtain/acquire the second carpooling request.

In some embodiments, the second carpooling request may further include a second travel starting point, a second travel destination, a second starting time, a second identifier of the second passenger terminal, or the like, or any combination thereof.

In some embodiments, the predetermined distance may be any distance determined by the first passenger terminal, the processor 220, the driver terminal offers the carpooling service, or the like, or any combination thereof. For example, the predetermined distance may include 0 meter (i.e. the first passenger terminal may be at the same starting point with the second passenger terminal), 500 meters, 1000 meters, 5000 meters, or the like, or any combination thereof.

In some embodiments, the second matching information may include a number, a letter, a symbol, a character, an image, a sound, a code, or the like, or any combination thereof. For example, the second matching information may be a series of numbers of "1243". As another example, the second matching information may be a QR code. In some embodiments, the second matching information may be predetermined and known by acquaintances and/or friends who request for a carpooling service.

In some embodiments, there may be at least one second passenger terminal within the predetermined distance from the first passenger terminal sending second carpooling requests to the processor 220. In some embodiments, the amount of the second passenger terminals may be determined according to the seat of the vehicle that associated with the carpooling request. For example, if the vehicle that associated with the carpooling request is a normal car, the amount of the second passenger terminals may be 3 at most.

In some embodiments, if there is no second passenger terminal within the predetermined distance from the first passenger terminal, the processor 220 may send a failure notification of the first carpooling request to the first passenger terminal.

In step 830, the processor 220 may determine whether the first matching information corresponds and/or matches the second matching information.

Correspondence between the first matching information and the second matching information may reflect a prior agreement of carpooling between a user (e.g., a first passenger) of the first passenger terminal and a user (e.g., a second passenger) of the second passenger terminal. For example, the prior agreement of carpooling may be preset between the first passenger and the second passenger. In some embodiments, whether the first matching information matches the second matching information may be determined according to a logical relationship between the first matching information and the second matching information. For example, if the first matching information is the same as the second matching information (e.g., the first matching information and the second matching information are letters of "carpooling"), the processor 220 may determine that the first matching information match the second one.

The logical relationship between the first matching information and the second matching information may also be semantic. When the first and second matching information is semantically connected with each other, the processor 220 may determine that the first passenger and second passenger have prior agreement of carpooling. For example, if the second matching information is the answer of the first matching information (e.g., the first matching information is a question of "what is my phone number?", the second matching information is an answer of "123-4567-8900", the answer matches the question), the processor 220 may determine that the first matching information matches the second one.

The logical relationship between the first matching information and the second matching information may also be anything predetermined. As long as the first passenger and the second passenger agreed and set the first matching information and second matching information as a matching pair, and as long as the system 100 was informed of the matching pair in advance, the processor 220 may determine that the first matching information and the second matching information are matched, regardless of how irrelevant the first and second matching information read.

The first matching information and the second matching information may bear a preset one-to-one relationship. For example, the second matching information is the only matching information corresponding to the first matching information. Alternatively, the first matching information may have more than one pieces of corresponding matching information. For example, there may be a preset third matching information different from the second matching information that is also correspond with the first matching information.

In some embodiments, if the first matching information matches the second matching information, in step 840, the processor 220 may generate a carpooling order based on the first matching information and the second matching information. In some embodiments, the carpooling order may include the identifier of the first passenger terminal, the identifier of the second passenger terminal, the first travel starting point, the second travel starting point, the first travel destination, the second travel destination, the first starting time, the second starting time, or the like, or any combination thereof.

In step 850, the processor 220 may send a confirmation notification to the first passenger terminal and the second passenger terminal. In some embodiments, the confirmation notification to the first passenger terminal may include the identifier of the first passenger terminal, the identifier of the second passenger terminal, the first travel starting point, the second travel starting point, the first travel destination, the second travel destination, the first starting time, the second starting time, a starting time of the carpooling order, or the like, or any combination thereof. In some embodiments, the confirmation notification to the first passenger terminal and the confirmation notification to the second passenger terminal may be different. For example, the confirmation notification to the first passenger terminal may include information relating to the second passenger terminal (e.g., the identifier of the second passenger terminal, the second travel starting point, the second starting time, the second travel destination, etc.). The confirmation notification to the second passenger terminal may include information relating to the first passenger terminal (e.g., the identifier of the first passenger terminal, the first travel starting point, the first starting time, the first travel destination, etc.).

In some embodiments, the processor 220 may send the carpooling order to at least one driver terminal after generating the carpooling order. In some embodiments, when the carpooling order ends, the processor 220 may obtain/acquire a success confirmation of the carpooling order from the first passenger terminal, and/or the candidate second passenger terminal. In some embodiments, the processor 220 may implement step 720 to step 730 as shown in FIG. 7 in the present disclosure to determine each payment amount.

In some embodiments, if the first matching information does not match the second matching information (e.g., the first matching information is "1234", the second matching information is "1324"), in step 860, the processor 220 may send a failure notification of the first carpooling request to the first passenger terminal. In some embodiments, the failure notification may include a reason of the first carpooling request. The failure notification may include a different starting point of the second passenger terminal, a mismatching information from the second passenger terminal, or the like, or any combination thereof.

In step 870, the processor 220 may send a re-carpooling request to the first passenger terminal. In step 880, the processor 220 may obtain/acquire a reply to the re-carpooling request from the first passenger terminal. In some embodiments, the reply to the re-carpooling request may be "yes". The processor 220 may repeat step 810 to step 880 in FIG. 8 to re-request a carpooling service. In some embodiments, the replay to the re-carpooling request may be "no". The processor 220 may stop showing re-carpooling request to the first passenger terminal. In some embodiments, the processor 220 may obtain/acquire no replay to the re-carpooling request. The processor 220 may continue to show the re-carpooling request to the first passenger terminal until obtaining/acquiring a reply to the re-carpooling request to the re-carpooling request from the first passenger terminal.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment," "one embodiment," or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "block," "module," "engine," "unit," "component," or "system." Furthermore, aspects of the present disclosure may take the form of a computer program product embodied in one or more computer readable media having computer readable program code embodied thereon.

A computer readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 1703, Perl, COBOL 1702, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a software as a service (SaaS).

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software-only solution-e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

## Claims

1. A system for providing carpool service to a user and a contact thereof, comprising:
at least one computer-readable storage medium including a set of instructions for providing carpool service to a user and a contact thereof;
at least one communication port in communication with a first passenger terminal and at least on second passenger terminal associated with at least one contact stored in the first passenger terminal; and
at least one processor in communication with the computer-readable storage medium, wherein when executing the set of instructions, the at least one processor is directed to:
obtain, via the at least one communication port, a carpooling request from a first passenger terminal, the carpooling request including at least one contact stored in the first passenger terminal;
identify at least one second passenger terminal associated with the at least one contact;
send, via the at least one communication port, an invitation for carpooling with the first passenger terminal to a candidate second passenger terminal among the at least one second passenger terminal, wherein the invitation is displayed on the candidate second passenger terminal as a cellphone message, an e-mail, or a pop-up message from an application embedded in the candidate second passenger terminal; and
obtain, via the at least one communication port, a response to the invitation from the candidate second passenger terminal indicating whether the carpooling request is accepted.

2. The system of claim 1, wherein the response to the invitation comprises a refusal response to refuse the invitation, and the at least one processor is further directed to:
send, via the at least one communication port, a failure notification of the carpooling request to the first passenger terminal.

3. The system of claim 2, the at least one processor is further directed to:
send, via the at least one communication port, a re-carpooling request to the first passenger terminal to be displayed on the first passenger terminal; and
obtain, via the at least one communication port, a reply to the re-carpooling request from the first passenger terminal.

4. The system of any one of claims 1-3, wherein the response to the invitation comprises an acceptance response to accept the invitation; and the at least one processor is further directed to:
generate a carpooling order based on the carpooling request; and
send, via the at least one communication port, a confirmation notification of the carpooling order to the first passenger terminal and the candidate second passenger terminal.

5. The system of claim 4, wherein the carpooling order includes a first travel starting point of the first passenger terminal and a second travel start point of the second passenger terminal, wherein the first travel starting point is within a predetermined distance from the second travel starting point.

6. The system of claim 5, wherein the predetermined distance is determined based on a real-time traffic condition.

7. The system of any one of claims 3-6, wherein the at least one processor is further directed to:
obtain a success confirmation of the carpooling order;
determine a first payment amount of the first passenger terminal; and
determine a second payment amount of the second passenger terminal.

8. The system of claim 7, wherein the first payment amount and the second payment amount are determined before a journey of the carpooling order begins.

9. A method for providing carpooling service to a user and a contact thereof, comprising:
obtaining, by a computer server, a message of a carpooling request from a first passenger terminal, the carpooling request including at least one contact stored in the first passenger terminal;
identifying, by the computer server, at least one second passenger terminal associated with the at least one contact;
sending, by the computer server, a message of an invitation for carpooling with the first passenger terminal to a candidate second passenger terminal among the at least one second passenger terminal, wherein the message of invitation is displayed on the candidate second passenger terminal as a cellphone message, an e-mail, or a pop-up message from an application embedded in the candidate second passenger terminal; and
obtaining, by the computer server, a message in response to the invitation from the candidate second passenger terminal indicating whether the carpooling request is accepted.

10. The method of claim 9, wherein the response to the invitation comprises a refusal response to refuse the invitation, and the method further comprising:
sending, by the computer server, a failure notification of the carpooling request to the first passenger terminal.

11. The method of claim 10, further comprising:
sending, by the computer server, a message of a re-carpooling request to the first passenger terminal to be displayed on the first passenger terminal; and
obtaining, by the computer server, a message of reply to the re-carpooling request from the first passenger terminal.

12. The method of any one of claims 9-11, wherein the message in response to the invitation comprises an acceptance response to accept the invitation; and the method further comprising:
generating, by the computer server, a carpooling order based on the carpooling request; and
sending, by the computer server, a confirmation notification of the carpooling order to the first passenger terminal and the candidate second passenger terminal.

13. The method of claim 12, wherein the carpooling order includes a first travel starting point of the first passenger terminal and a second travel start point of the second passenger terminal, wherein the first travel starting point is within a predetermined distance from the second travel starting point.

14. The system of any one of claims 11-13, further comprising:
obtaining, by the computer server, a success confirmation of the carpooling order;
determining, by the computer server, a first payment amount of the first passenger terminal; and
determining, by the computer server, a second payment amount of the second passenger terminal.

15. A non-transitory computer readable medium, comprising at least one set of instructions for providing carpooling service to a user and a contact thereof, wherein when executed by a processor of a computer server, the at least one set of instructions directs the processor to perform acts of:
obtaining a carpooling request from a first passenger terminal, the carpooling request including at least one contact stored in the first passenger terminal;
identifying at least one second passenger terminal associated with the at least one contact;
sending an invitation for carpooling with the first passenger terminal to a candidate second passenger terminal among the at least one second passenger terminal, wherein the invitation is displayed on the candidate second passenger terminal as a cellphone message, an e-mail, or a pop-up message from an application embedded in the candidate second passenger terminal; and
obtaining a response to the invitation from the candidate second passenger terminal indicating whether the carpooling request is accepted.
